# EUROPÄISCHE PATENTANMELDUNG

(11) **EP 3 195 768 A1**
(43) Veröffentlichungstag der Anmeldung: **26.07.2017**
(21) Anmeldenummer: 17151175.1
(22) Anmeldetag: 12.01.2017
(51) Int. Cl.: A47J 31/46, A47J 31/60

(54) **VORRICHTUNG ZUM ENTLEEREN EINER GETRÄNKEAUSGABELEITUNG EINER HEISSGETRÄNKE-ZUBEREITUNGSEINRICHTUNG**

(30) Priorität: 15.01.2016 DE 102016200418
(71) Anmelder: BSH Hausgeräte GmbH, 81739 München (DE)
(72) Erfinder: Huber, Michael, 6344 Walchsee (AT); Ostermaier, Albert, 83371 Stein a.d. Traun (DE); Hauser, Andreas, 83026 Rosenheim (DE); Haslacher, Christian, 5303 Thalgau (AT)

(57) **Zusammenfassung**

Es wird eine Heißgetränke-Zubereitungseinrichtung (10) beschrieben. Die Heißgetränke-Zubereitungseinrichtung weist eine Brüheinheit (1) und eine Getränkeausgabeeinheit (2) auf. Außerdem umfasst die Heißgetränke-Zubereitungseinrichtung eine Absaugeinheit (3, 3a), welche zwischen der Brüheinheit (1) und der Getränkeausgabeeinheit (2) angeordnet ist und dazu eingerichtet ist, ein Restfluid abzusaugen, welches sich zwischen der Brüheinheit (1) und der Getränkeausgabeeinheit (2) befindet.

## Beschreibung

Die Erfindung betrifft eine Heißgetränke-Zubereitungseinrichtung mit einer Brüheinheit und mit einer Getränkeausgabeeinheit.

Bei dem Betrieb einer Heißgetränke-Zubereitungseinrichtung, insbesondere eines Kaffeeautomaten, verbleibt nach dem Beenden des Getränkebezugs oder auch nach dem Ende eines Spülvorgangs in der Getränkeausgabeleitung zwischen dem Ausgang der Brüheinheit und dem Getränkeverteiler systembedingt oft ein Rest des Getränks bzw. Wasser zurück. Da der Rest beim nächsten Betrieb der Heißgetränke-Zubereitungseinrichtung vor der gewählten Getränkeflüssigkeit durch die Getränkeausgabeleitung herausfließt, sammelt sich der Rest des Getränks bzw. Wasser in der bereitgestellten Tasse. Somit wird das ausgewählte Getränk mit der Restflüssigkeit verunreinigt, was zwar nicht gesundheitsschädlich ist, aber von manchen Benutzern als unangenehm oder unhygienisch wahrgenommen wird. In DE 601 20 626 T2 ist daher eine Ansaugeinrichtung beschrieben, welche dazu dient, in einer Hauptleitung eines Wärmeblocks einer Kaffeemaschine befindliches Restwasser in eine Spülleitung abzusaugen. Allerdings ist in DE 601 20 626 T2 keine Vorrichtung vorgesehen, mit der in der Getränkeausgabeleitung befindliches Restfluid entfernt werden könnte.

Es ist eine Aufgabe der vorliegenden Erfindung, eine Heißgetränke-Zubereitungseinrichtung zu entwickeln, bei der nach deren Betrieb oder einem Spülvorgang verbleibendes Restfluid aus der Getränkeausgabeleitung der Heißgetränke-Zubereitungseinrichtung zuverlässig entfernt werden kann.

Diese Aufgabe wird durch eine Heißgetränke-Zubereitungseinrichtung gemäß Patentanspruch 1 gelöst, indem sie eine Absaugeinheit umfasst. Die Absaugeinheit ist zwischen der Brüheinheit und der Getränkeausgabeeinheit angeordnet und ist dazu eingerichtet, ein Restfluid abzusaugen, welches sich zwischen der Brüheinheit und der Getränkeausgabeeinheit befindet. Als Getränkeausgabeeinheit soll in diesem Zusammenhang eine Einheit der Heißgetränke-Zubereitungseinrichtung verstanden werden, welche dazu dient, eine aus der Heißgetränke-Zubereitungseinrichtung hinausfließende Flüssigkeit nach außen, d. h. zum Beispiel in ein an der Heißgetränke-Zubereitungseinrichtung entsprechend positioniertes Trinkgefäß, abzugeben. Für den Fall einer Kaffeemaschine kann es sich dabei zum Beispiel um einen sogenannten Kaffeeverteiler handeln, der verschiedene Flüssigkeiten, wie zum Beispiel Kaffee oder Wasser, ausgibt. Im Allgemeinen verbleibt nach dem Betrieb eines Heißgetränke-Zubereitungsgeräts zwischen der Brüheinheit und der Getränkeausgabeeinheit etwas Restfluid zurück. Mit Hilfe der direkt zwischen der Brüheinheit und der Getränkeausgabeeinheit angeordneten Absaugeinheit ist es nun möglich, den verbleibenden Rest auch dort nach dem Betrieb des Geräts, insbesondere nach einer Getränkeausgabe, zuverlässig zu entfernen, so dass bei einem erneuten Betrieb des Geräts die Abgabe eines unbeeinträchtigten Getränks gewährleistet ist.

Weitere besonders vorteilhafte Ausgestaltungen und Weiterbildungen der Erfindung ergeben sich aus den abhängigen Ansprüchen sowie der nachfolgenden Beschreibung, wobei Merkmale verschiedener Ausführungsbeispiele zu neuen Ausführungsbeispielen kombiniert werden können.

Die Heißgetränke-Zubereitungseinrichtung weist regelmäßig eine Getränkeausgabeleitung auf, welche zwischen dem Ausgang der Brüheinheit und der Getränkeausgabeeinheit angeordnet ist. An ihr kann die Absaugeinrichtung grundsätzlich unmittelbar angebracht sein. Die erfindungsgemäße Absaugeinheit kann bevorzugt über eine Abzweigungsleitung an die Getränkeausgabeleitung angeschlossen sein. Die Getränkeausgabeleitung und die Abzweigungsleitung können also zusammen eine Leitungsverzweigung bilden, womit die Anordnung der Absaugeinrichtung innerhalb der Zubereitungseinrichtung nicht mehr räumlich auf die unmittelbare Nähe der Getränkeausgabeleitung festgelegt ist. Die Getränkeausgabeleitung sowie die Abzweigungsleitung können zum Beispiel jeweils als Schlauch ausgeführt sein. Damit sich während des Betriebs der Heißgetränke-Zubereitungseinrichtung keinerlei Getränkeflüssigkeit in der Abzweigungsleitung sammelt, kann zum Beispiel ein steuerbares oder schaltbares Ventil an dem der Getränkeausgabeleitung zugewandten Ende der Abzweigungsleitung angeordnet sein.

In einer bevorzugten Variante der erfindungsgemäßen Heißgetränke-Zubereitungseinrichtung weist die Absaugeinheit einen Zylinderraum mit einem darin beweglichen Absaugkolben auf. Der Absaugkolben ist dazu eingerichtet, zum Absaugen des Restfluids einen Unterdruck in der Getränkeausgabeleitung zwischen der Brüheinheit und der Getränkeausgabeeinheit zu erzeugen. Dies wird durch eine Linearbewegung des Absaugkolbens erreicht, welche aufgrund der Volumenvergrößerung bei gleichbleibender Luft- und Fluidmenge einen Unterdruck in einem Saugraum bewirkt, der einen zunehmenden Teil des Zylinderraums einnimmt. Eine derart ausgebildete Absaugeinheit lässt sich besonders einfach und kostengünstig herstellen. Zudem ist eine Betätigung bzw. Ansteuerung des Absaugkolbens, zum Beispiel mit Hilfe einer Aktuatoreinheit, sehr leicht zu realisieren.

In einer Ausgestaltung der erfindungsgemäßen Heißgetränke-Zubereitungseinrichtung umfasst der Zylinderraum einen Restfluidausgang zum Abführen des von der Absaugeinheit in den Zylinderraum abgesaugten Restfluids. Der Restfluidausgang stellt eine Fluidverbindung zwischen dem Zylinderraum und einer Abführungsleitung zur Verfügung. Dafür ist der Restfluidausgang an dem Gehäuse des Zylinderraums derart angeordnet, dass erst bei einer Kolbenstellung, bei der sich das abgesaugte Restfluid vollständig im Zylinderraum befindet, der Restfluidausgang geöffnet wird. Jedenfalls sollte der Restfluidausgang an dem Gehäuse des Zylinderraums derart positioniert sein, dass während des Aufbaus eines Unterdrucks in der Getränkeausgabeleitung durch den Absaugkolben noch keine Verbindung zwischen dem Saugraum des Absaugkolbens und dem Restfluidausgang besteht. Vorzugsweise sollte eine Fluidverbindung zwischen dem Restfluidausgang und dem Saugraum erst dann bestehen, wenn sich der Absaugkolben bei der Absaugbewegung am Umkehrpunkt bzw. kurz vor dem Umkehrpunkt der Kolbenbewegung befindet.

In einer besonders einfach zu realisierenden Variante der erfindungsgemäßen Heißgetränke-Zubereitungseinrichtung ist der Restfluidausgang am Zylindermantel des Zylinderraums angeordnet. Wird der Absaugkolben der Absaugeinheit während eines Absaugvorgangs an dem Restfluidausgang vorbeibewegt, so wird eine Fluidverbindung zwischen dem Saugraum und dem Restfluidausgang freigegeben. Damit bricht zwar der Unterdruck zusammen. Aber mit einer geeigneten Positionierung des Restfluidausgangs kann das Restfluid in einer Freispiegelleitung aus dem Zylinderraum abfließen. Bei einer solchen Anordnung werden keine zusätzlichen Ventile, insbesondere Rückschlagventile, benötigt, die zum Beispiel während eines Absaugvorgangs den Saugbereich des Zylinderraums gegenüber einer Abführungsleitung verschließen. Somit ist der Aufbau der Absaugeinheit vereinfacht und die Anordnung ist leicht und kostengünstig herstellbar.

In einer alternativen Variante der erfindungsgemäßen Heißgetränke-Zubereitungseinrichtung weist der Absaugkolben ein erstes Rückschlagventil an seinem Kolbenboden bzw. -teller auf. Beispielsweise befindet sich ein zweites Rückschlagventil am Einlass der Absaugeinheit. Während einer Saugbewegung des Absaugkolbens ist das erste Rückschlagventil geschlossen, während das zweite Rückschlagventil geöffnet ist und Restfluid in den Saugraum der Absaugeinheit strömen kann. Bei einer Rückbewegung des Kolbens der Absaugeinheit öffnet sich das erste Rückschlagventil am Kolbenboden und das zweite Rückschlagventil schließt sich, so dass das angesaugte Restfluid den Kolbenboden bzw. den Kolbenschaft passiert und der Saugraum entleert wird. Der Einsatz eines Rückschlagventils am Kolbenteller ermöglicht eine weitgehend freie Wahl der Positionierung des Restfluidausgangs im Zylinderraum der Absaugeinheit. Beispielsweise kann der Restfluidausgang bei dieser Variante auch an der Grundfläche des Zylinderraums der Absaugeinheit angeordnet sein.

Besonders bevorzugt weist die erfindungsgemäße Heißgetränke-Zubereitungseinrichtung eine Aktuatoreinheit zur Ansteuerung der Absaugeinheit mit einem Betätigungselement auf, mit dem eine Bewegung, vorzugsweise eine Rotationsbewegung, der Aktuatoreinheit in eine Translationsbewegung des Absaugkolbens wandelbar ist. Eine solche Aktuatoreinheit kann als Betätigungselement zum Beispiel einen Aktuatornocken, eine Pleuelstange oder eine Zahnstange umfassen. Das jeweilige Betätigungselement kann zum Beispiel über einen sich drehenden Antrieb, wie zum Beispiel einen Elektromotor, in Rotation versetzt werden. Alternativ kann als Antrieb ein Linearmotor verwendet werden, der das Betätigungselement in eine lineare Bewegung versetzt. Mit Hilfe einer solchen Aktuatoreinheit kann ein automatisierter Absaugvorgang nach einem Betrieb einer Heißgetränke-Zubereitungseinrichtung ermöglicht werden.

In einer besonders effektiven Ausgestaltung der erfindungsgemäßen Heißgetränke-Zubereitungseinrichtung weist die Absaugeinheit ein Rückstellelement, vorzugsweise eine Rückstellfeder auf, welches dazu eingerichtet ist, den Absaugkolben nach einer Kolbenbewegung in seine Ausgangsposition zurückzuversetzen. Das Rückstellelement ist insbesondere bei Ausgestaltungen vorteilhaft, bei denen eine Aktuatoreinheit, zum Beispiel ein Aktuatornocken, eine Kolbenbewegung nur in eine Richtung, zum Beispiel in Druckrichtung, aber nicht in die andere Richtung, zum Beispiel in Saugrichtung, erzwingt.

Eine Heißgetränke-Zubereitungseinrichtung umfasst üblicherweise ein Fluidtransportsystem, in dem ein Fluid, meist Wasser, durch ein Heizsystem gepumpt und erhitzt wird. Das Fluidtransportsystem weist in einer besonders vorteilhaften Variante als Aktuatoreinheit ein Druckkolbensystem mit einem Druckkolben auf. Das Druckkolbensystem ist dazu eingerichtet, einen in dem Fluidtransportsystem vorhandenen Druck als Antriebsdruck zur Bewegung des Druckkolbens zu nutzen und mit Hilfe der Bewegung des Druckkolbens die Absaugeinheit anzusteuern. Eine solche Aktuatoreinheit sowie eine damit ausgestattete Heißgetränke-Zubereitungseinrichtung sind in der Patentannmeldung mit der Anmeldernummer 201502964 mit dem Titel "Hydraulischer Aktuator für ein Heißgetränke-Zubereitungsgerät" desselben Anmelders vom selben Tage ausführlich erläutert. Ihre diesbezügliche Offenbarung ist hiermit in die vorliegende Patentanmeldung einbezogen. Besonders vorteilhaft wird bei dieser Variante ein vorhandener Betriebsdruck in dem Fluidtransportsystem dazu genutzt, die Absaugeinheit anzusteuern. Mithin wird bei dieser Variante keine zusätzliche Kraftquelle - wie zum Beispiel ein Elektromotor - benötigt. Außerdem muss bei dieser Variante auch keine Drehbewegung in eine Linearbewegung gewandelt werden, da das als Aktuator verwendete Druckkolbensystem bereits eine Linearbewegung ausführt.

Die Erfindung wird im Folgenden unter Hinweis auf die beigefügten Figuren beispielshalber näher erläutert. Dabei sind in den verschiedenen Figuren gleiche Komponenten mit identischen Bezugsziffern versehen. Es zeigen:
- FIG 1: eine schematische Darstellung einer Absaugeinheit einer Heißgetränke-Zubereitungseinrichtung gemäß einem ersten Ausführungsbeispiel der Erfindung in einem ersten Betriebszustand,
- FIG 2: eine schematische Darstellung der in FIG 1 gezeigten Absaugeinheit in einem zweiten Betriebszustand,
- FIG 3: eine schematische Darstellung einer Absaugeinheit einer Heißgetränke-Zubereitungseinrichtung gemäß einem zweiten Ausführungsbeispiel der Erfindung in einem ersten Betriebszustand,
- FIG 4: eine schematische Darstellung der in FIG 3 gezeigten Absaugeinheit in einem zweiten Betriebszustand,
- FIG 5: eine schematische Darstellung einer Aktuatoranordnung einer Absaugeinheit einer Heißgetränke-Zubereitungseinrichtung gemäß einem Ausführungsbeispiel der Erfindung,
- FIG 6: eine schematische Darstellung einer alternativen Aktuatoranordnung einer Absaugeinheit einer Heißgetränke-Zubereitungseinrichtung gemäß einem Ausführungsbeispiel der Erfindung,
- FIG 7: eine schematische Darstellung einer weiteren alternativen Aktuatoranordnung einer Absaugeinheit einer Heißgetränke-Zubereitungseinrichtung gemäß einem Ausführungsbeispiel der Erfindung.

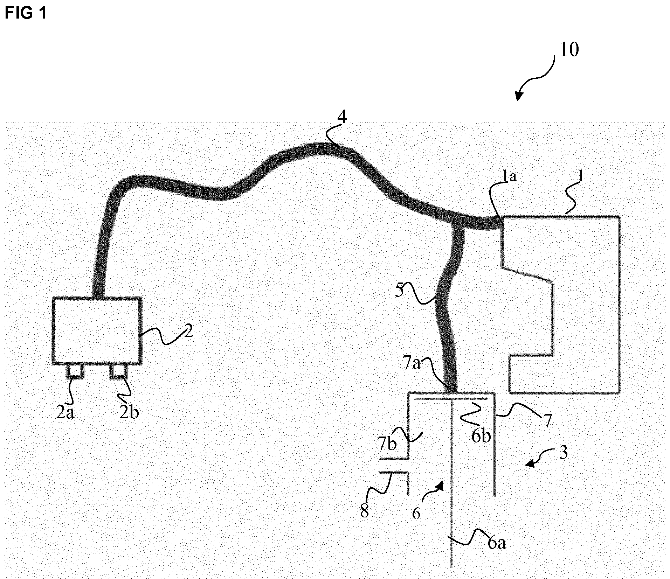

FIG 1 zeigt schematisch einen Ausschnitt aus einer Heißgetränke-Zubereitungseinrichtung 10, beispielsweise ein Kaffeeautomat, gemäß einem ersten Ausführungsbeispiel der Erfindung in einem ersten Betriebszustand. Teil der Heißgetränke-Zubereitungseinrichtung 10 ist eine Brüheinheit 1 zum Aufbrühen eines Heißgetränks, zum Beispiel Kaffee oder Tee, und eine Getränkeausgabeeinheit 2 mit Auslässen 2a, 2b, mit der das Heißgetränk an einen Benutzer ausgeschenkt wird. Eine Getränkeausgabeleitung 4, zum Beispiel ein Getränkeausgabeschlauch, verbindet die Brüheinheit 1 fluidisch mit der Getränkeausgabeeinheit 2.

Die Heißgetränke-Zubereitungseinrichtung 10 umfasst außerdem eine Absaugeinheit 3, welche über eine Abzweigungsleitung 5 mit der Getränkeausgabeleitung 4 verbunden ist und dazu dient, nach einem Betrieb der Heißgetränke-Zubereitungseinrichtung 10 eventuell in der Getränkeausgabeleitung 4 zurückbleibendes Restfluid abzusaugen, beispielsweise einen Rest des Heißgetränks oder Wasserdampf. Damit wird bei einem erneuten Betrieb der Heißgetränke-Zubereitungseinrichtung 10 kein Restfluid über die Getränkeausgabeeinheit 2 ungewollt abgegeben oder innerhalb der Getränkeausgabeleitung 4 mit dem Heißgetränk vermischt.

Die Absaugeinheit 3 weist einen Zylinder 7 auf, in dem ein Absaugkolben 6 auf- und abbewegbar angeordnet ist. Der Zylinder 7 weist an seinem der Abzweigungsleitung 5 zugewandten Ende eine Öffnung 7a auf, durch die in dem System aus Abzweigungsleitung 5 und Getränkeausgabeleitung 4 befindliches Restfluid in den Zylinderraum des Zylinders fließen kann. Mit einer Saugbewegung des Absaugkolbens 6 wird das Restfluid aus dem System aus Abzweigungsleitung 5 und Getränkeausgabeleitung 4 in den Zylinderraum 7b des Zylinders 7 angesaugt. Zusätzlich ist an der Seitenwand des Zylinders 7 ein Restfluidausgang 8 angeordnet, durch den in den Zylinderraum des Zylinders 7 angesaugtes Restfluid abfließen kann. Der Absaugkolben 6 umfasst eine Kolbenstange 6a und einen Kolbenschaft 6b, dessen Stirnfläche der Basisfläche des Zylinderraums 7b entspricht, mit dem das Saugvolumen des Zylinderraums 7b variiert werden kann. In dem in FIG 1 gezeigten Betriebszustand befindet sich der Absaugkolben 6 in einer Position, in der kein Fluid angesaugt ist.

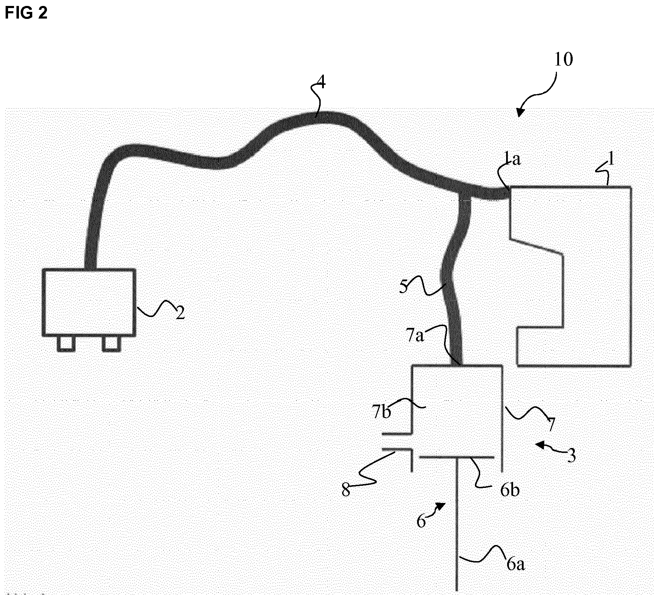

Dagegen befindet sich der Absaugkolben 6 in FIG 2 in einer Saugstellung, in der im Zylinderraum 7b des Zylinders 7 ein Unterdruck vorherrscht, so dass eventuell in dem System aus Abzweigungsleitung 5 und Getränkeausgabeleitung 4 befindliches Restfluid in den Zylinderraum 7b des Zylinders 7 angesaugt wird. Passiert der Kolbenboden 9 des Saugkolbens 6 bei seiner Abwärtsbewegung, d. h. bei der Saugbewegung, den Restfluidausgang 8, so wird über den Restfluidausgang 8 ein Abfluss für das Restfluid geöffnet, so dass es durch den Restfluidausgang 8 der Schwerkraft folgend abfließt.

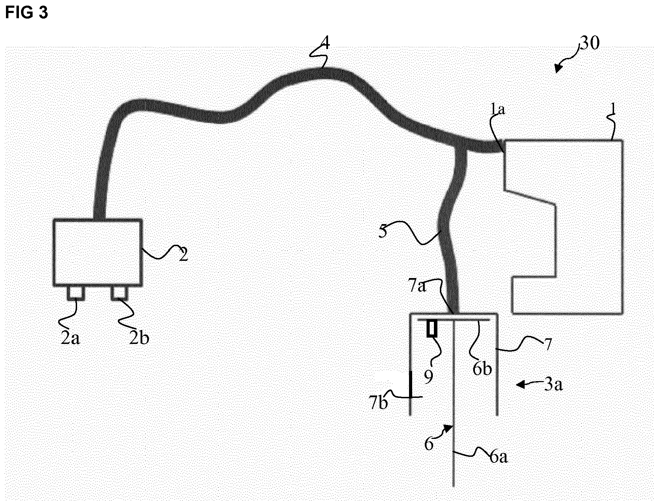

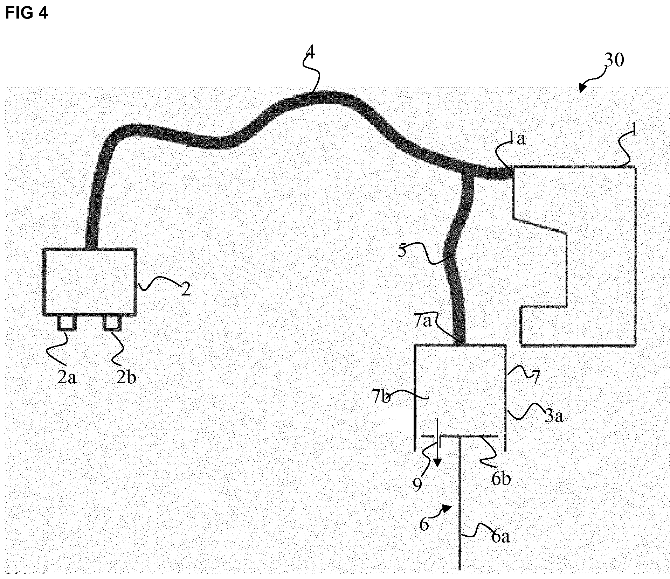

FIG 3 und FIG 4 zeigen schematisch einen Ausschnitt einer Heißgetränke-Zubereitungseinrichtung 30 gemäß einem zweiten Ausführungsbeispiel. FIG 3 zeigt die Heißgetränke-Zubereitungseinrichtung 30 in einem ersten Betriebszustand, in dem kein Restfluid angesaugt ist (vgl. FIG 1). FIG 4 zeigt die Heißgetränke-Zubereitungseinrichtung 30 in einem zweiten Betriebszustand, in dem mit Hilfe einer Absaugeinheit 3a Restfluid aus einem System aus einer Abzweigungsleitung 5 und einer Getränkeausgabeleitung 4 von der Absaugeinheit 3a abgesaugt wird (vgl. FIG 2). Die Absaugeinheit 3a in FIG 3 und FIG 4 unterscheidet sich von der Absaugeinheit 3 gemäß FIG 1 und 2 dahingehend, dass an dem Kolbenschaft bzw. Kolbenboden 6b des Kolbens 6 der Absaugeinheit 3a ein erstes Rückschlagventil 9 angeordnet ist. Ein zweites Rückschlagventil (nicht gezeigt) kann sich zum Beispiel am Einlass 7a der Absaugeinheit befinden. Das zweite Rückschlagventil öffnet während einer Saugbewegung und lässt dabei Restfluid in den Saugraum der Absaugeinheit 3a strömen, während das erste Rückschlagventil 9 am Kolbenschaft 6b des Kolbens 5 geschlossen ist. Bei einer Druckbewegung schließt das zweite Rückschlagventil und das erste Rückschlagventil 9 öffnet sich, so dass das in dem Saugraum befindliche Restfluid den Kolbenschaft 6b durch das erste Rückschlagventil 9 passieren kann.

Der Vorgang der Druckbewegung des Kolbens 6 ist in FIG 4 gezeigt. Dort ist das erste Rückschlagventil 9 gerade geöffnet, während Restfluid das geöffnete erste Rückschlagventil 9 passiert, was durch einen Pfeil in Vertikalrichtung angedeutet ist, und dann auf der Unterseite des Zylinders 7 der Absaugeinheit 3a beispielsweise durch eine Abflussleitung (nicht gezeigt) abfließen kann.

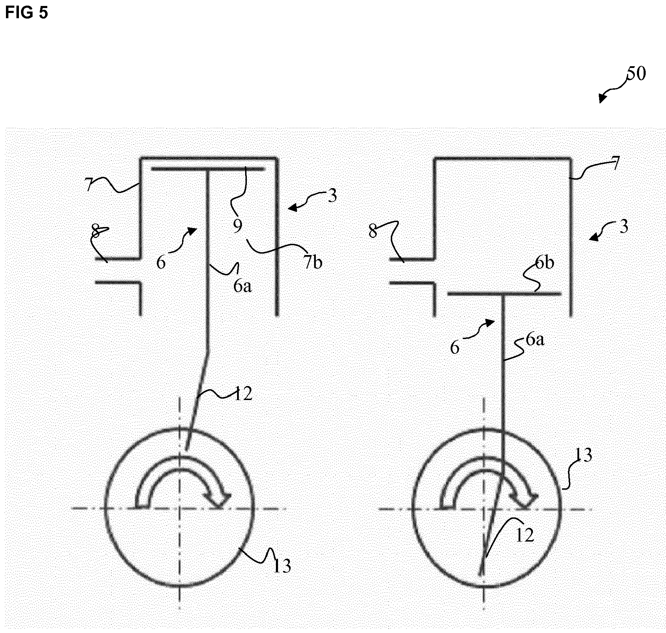

Die folgenden FIG 5 bis 7 betreffen erfindungsgemäße Aktuatoranordnungen 50, 60, 70, weshalb die Absaugeinheiten 3 nur vereinfacht, aber jeweils in den beiden Betriebszuständen gemäß FIG 1 und 2 bzw. 3 und 4 dargestellt sind. FIG 5 zeigt eine schematische Darstellung einer ersten Aktuatoranordnung 50 einer Absaugeinheit 3 gemäß der Erfindung. Die Kolbenstange 6a des Kolbens 6 der Absaugeinheit 3 wird von einem Motor 13, beispielsweise einem Elektromotor, über eine Pleuelstange 12 betätigt. Die Pleuelstange 12 wandelt eine Drehbewegung des Motors 13 in eine Linearbewegung des Kolbens 6, so dass sich der Kolben 6 in dem Zylinder 7 der Absaugeinheit 3 auf und ab bewegt.

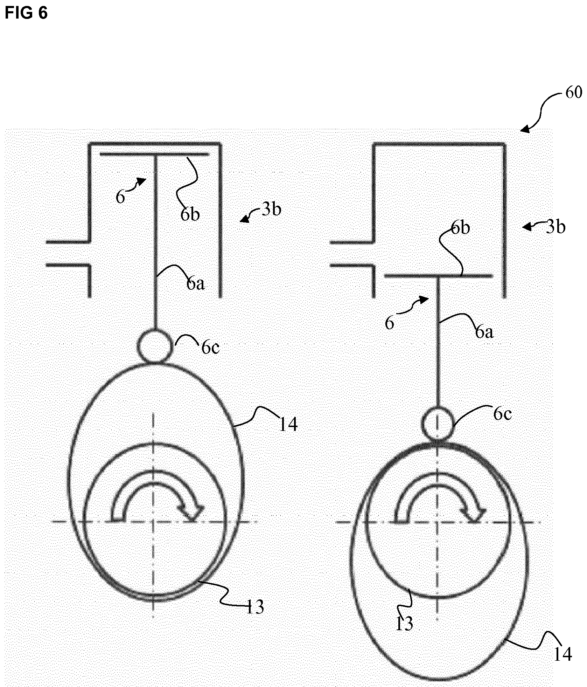

In FIG 6 ist eine schematische Darstellung einer Aktuatoranordnung 60 einer Absaugeinheit 3 einer Heißgetränke-Zubereitungseinrichtung gemäß einem alternativen Ausführungsbeispiel der Erfindung gezeigt. Die Kolbenstange 6a des Kolbens 6 der Absaugeinheit 3 wird ebenfalls wie bei der in FIG 5 gezeigten Aktuatoranordnung von einem Motor 13 betätigt. Allerdings erfolgt die Betätigung in FIG 6 mit Hilfe eines Aktuatornockens 14, welcher ein an der Kolbenstange 6a angeordnetes Betätigungselement 6c betätigt. Das Betätigungselement 6c wandelt die Drehbewegung des Aktuatornockens 14 in eine Linearbewegung der Kolbenstange 6a der Absaugeinheit 3b um. Dabei wird bei einer Bewegung des Aktuatornockens 14 in Richtung der Absaugeinheit 3a eine Druckkraft und bei einer Bewegung des Aktuatornockens 14 in Gegenrichtung eine Zugkraft auf das Betätigungselement 6c übertragen.

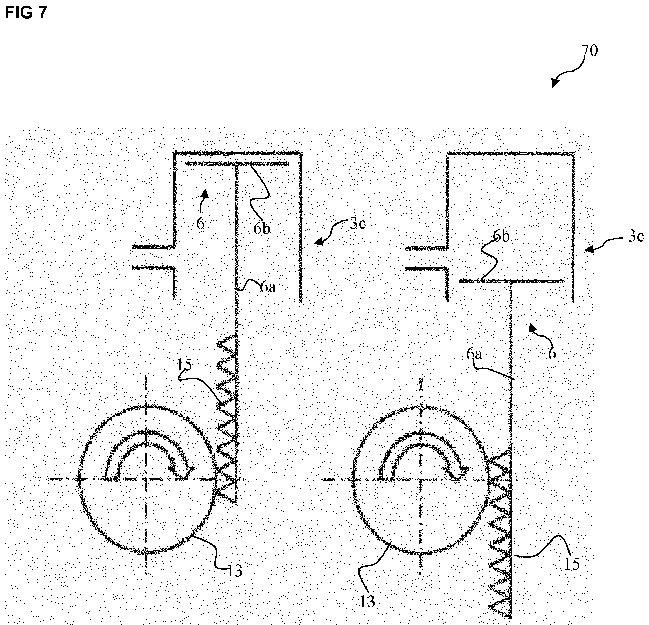

In FIG 7 ist eine schematische Darstellung einer Aktuatoranordnung 70 einer Absaugeinheit 3 einer Heißgetränke-Zubereitungseinrichtung gemäß einem weiteren Ausführungsbeispiel gezeigt. Die Absaugeinheit 3 wird ebenfalls von einem Motor 13 betätigt. Allerdings erfolgt die Betätigung bzw. die Übertragung der Motorbewegung auf den Saugkolben 6 der Absaugeinheit 3 mit Hilfe einer Zahnstange 15, welche an einem dem Kolbenschaft 6b des Kolbens 6 der Absaugeinheit 3c entgegengesetzten Ende der Kolbenstange 6a angeordnet ist und eine Drehbewegung des Motors 13 in eine lineare Kolbenbewegung wandelt. In FIG 7 muss der Motor 13 seine Drehrichtung ändern, um die Stellung des Kolbens 6 zu verändern. Beispielsweise muss sich der Motor 13 nach links, d. h. gegen den Uhrzeigersinn, drehen, um den Kolben 6 in die in der linken Teilzeichnung gezeigte Position zu versetzen. Um den Kolben 6 jedoch in die in der rechten Teilzeichnung gezeigte Position zu versetzen, muss sich der Motor 13 nach rechts, d. h. im Uhrzeigersinn, drehen.

Es wird abschließend darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Brüheinheit
- 1a: Ausgang
- 2: Getränkeausgabeeinheit
- 2a, 2b: Auslässe
- 3, 3a: Absaugeinheit
- 4: Getränkeausgabeleitung
- 5: Abzweigungsleitung
- 6: Absaugkolben
- 6a: Kolbenstange
- 6b: Kolbenboden/ Kolbenschaft/ Kolbenteller
- 6c: Betätigungselement
- 7: Zylinder
- 7a: Öffnung/ Einlass
- 7b: Zylinderraum
- 8: Restfluidausgang/ Auslass
- 9: Rückschlagventil
- 10: Heißgetränke-Zubereitungseinrichtung
- 12: Pleuelstange
- 13: Motor
- 14: Aktuatornocken
- 15: Zahnstange
- 30: Heißgetränke-Zubereitungseinrichtung
- 50, 60, 70: Aktuatoranordnung

## Patentansprüche

1. Heißgetränke-Zubereitungseinrichtung (10), aufweisend:
- eine Brüheinheit (1),
- eine Getränkeausgabeeinheit (2),
**gekennzeichnet durch**
eine Absaugeinheit (3, 3a), welche zwischen der Brüheinheit (1) und der Getränkeausgabeeinheit (2) angeordnet ist und dazu eingerichtet ist, ein Restfluid, welches sich zwischen der Brüheinheit (1) und der Getränkeausgabeeinheit (2) befindet, abzusaugen.

2. Heißgetränke-Zubereitungseinrichtung (10) nach Anspruch 1, aufweisend eine Getränkeausgabeleitung (4), welche zwischen der Brüheinheit (1) und der Getränkeausgabeeinheit (2) angeordnet ist,
**dadurch gekennzeichnet, dass**
die Absaugeinheit (3, 3a) über eine Abzweigungsleitung (5) an die Getränkeausgabeleitung (4) angeschlossen ist.

3. Heißgetränke-Zubereitungseinrichtung (10) nach Anspruch 1 oder 2,
**dadurch gekennzeichnet, dass**
die Absaugeinheit (3, 3a) einen Zylinderraum (7) mit einem darin beweglichen Absaugkolben (6) aufweist, welcher dazu eingerichtet ist, zum Absaugen des Restfluids einen Unterdruck zu erzeugen.

4. Heißgetränke-Zubereitungseinrichtung (10) nach Anspruch 3,
**dadurch gekennzeichnet, dass**
der Zylinderraum (7) einen Restfluidausgang (8) zum Abführen des von der Restfluid-Absaugeinheit (3) in den Zylinderraum (7) abgesaugten Restfluids umfasst.

5. Heißgetränke-Zubereitungseinrichtung (10) nach Anspruch 4,
**dadurch gekennzeichnet, dass**
dass der Restfluidausgang (8) am Zylindermantel des Zylinderraums (7) angeordnet ist.

6. Heißgetränke-Zubereitungseinrichtung (10) nach einem der Ansprüche 3 bis 5,
**dadurch gekennzeichnet, dass**
der Absaugkolben (6) ein Rückschlagventil (9) an seinem Kolbenboden (6b) aufweist, welches bei einer Überschreitung eines vorbestimmten Werts einer Druckdifferenz zwischen der Druckseite und der Saugseite der Absaugeinheit (3a) öffnet, so dass das angesaugte Restfluid bei einer Saugbewegung des Absaugkolbens (6) den Kolbenboden (6b) passiert.

7. Heißgetränke-Zubereitungseinrichtung (10) nach einem der Ansprüche 1 bis 6, ferner aufweisend eine Aktuatoreinheit (12, 13, 14, 15) zur Ansteuerung der Absaugeinheit (3) mit einem Betätigungselement (6c, 12, 14, 15), mit dem eine Bewegung, vorzugsweise eine Rotationsbewegung, der Aktuatoreinheit (12, 13, 14, 15) in eine Translationsbewegung des Absaugkolbens (6) wandelbar ist.

8. Heißgetränke-Zubereitungseinrichtung (10) nach einem der Ansprüche 3 bis 7,
**dadurch gekennzeichnet, dass**
die Absaugeinheit (3) ein Rückstellelement, vorzugsweise eine Rückstellfeder, aufweist, welches dazu eingerichtet ist, den Absaugkolben (6) nach einer Kolbenbewegung in seine Ausgangsposition zurückzuversetzen.

9. Heißgetränke-Zubereitungseinrichtung (10) nach einem der Ansprüche 1 bis 8, mit einem Fluidtransportsystem
**dadurch gekennzeichnet, dass**
das Fluidtransportsystem ein Druckkolbensystem mit einem Druckkolben aufweist, welches dazu eingerichtet ist, einen in dem Fluidtransportsystem vorhandenen Druck als Antriebsdruck zur Bewegung des Druckkolbens zu nutzen und mit Hilfe der Bewegung des Druckkolbens die Absaugeinheit (3) anzusteuern.
